# EUROPÄISCHE PATENTSCHRIFT

(11) **EP 1 554 542 B1**
(45) Veröffentlichungstag und Bekanntmachung des Hinweises auf die Patenterteilung: **30.06.2010**
(21) Anmeldenummer: 03748112.4
(22) Anmeldetag: 02.10.2003
(51) Int. Cl.: G01C 19/56

(54) **VERFAHREN ZUR ELEKTRONISCHEN ABSTIMMUNG DER AUSLESESCHWINGUNGSFREQUENZ EINES CORIOLISKREISELS**
METHOD FOR ELECTRONICALLY TUNING THE READOUT VIBRATION FREQUENCY OF A CORIOLIS GYROSCOPE
PROCEDE D'ACCORD ELECTRONIQUE DE LA FREQUENCE DE VIBRATION D'EXTRACTION D'UN GYROSCOPE VIBRANT

(30) Priorität: 18.10.2002 DE 10248733
(43) Veröffentlichungstag der Anmeldung: 20.07.2005
(73) Patentinhaber: Northrop Grumman LITEF GmbH, 79115 Freiburg (DE)
(72) Erfinder: SCHRÖDER, Werner, 77955 Ettenheim (DE)
(74) Vertreter: Müller, Frithjof E.
(86) Internationale Anmeldenummer: PCT/EP2003/010970
(87) Internationale Veröffentlichungsnummer: WO 2004/038331

(56) Entgegenhaltungen:
- WO-A-97/45699
- WO-A-99/19734

## Beschreibung

Die Erfindung betrifft ein Verfahren zur elektronischen Abstimmung der Frequenz der Ausleseschwingung auf die Frequenz der Anregungsschwingung bei einem Corioliskreisel.

Corioliskreisel (auch Vibrationskreisel genannt) werden in zunehmendem Umfang zu Navigationszwecken eingesetzt; sie weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System als auch als Closed-Loop-System realisiert werden. In einem Closed-Loop-System wird über jeweilige Regelkreise die Amplitude der Ausleseschwingung fortlaufend auf einen festen Wert - vorzugsweise null - rückgestellt.

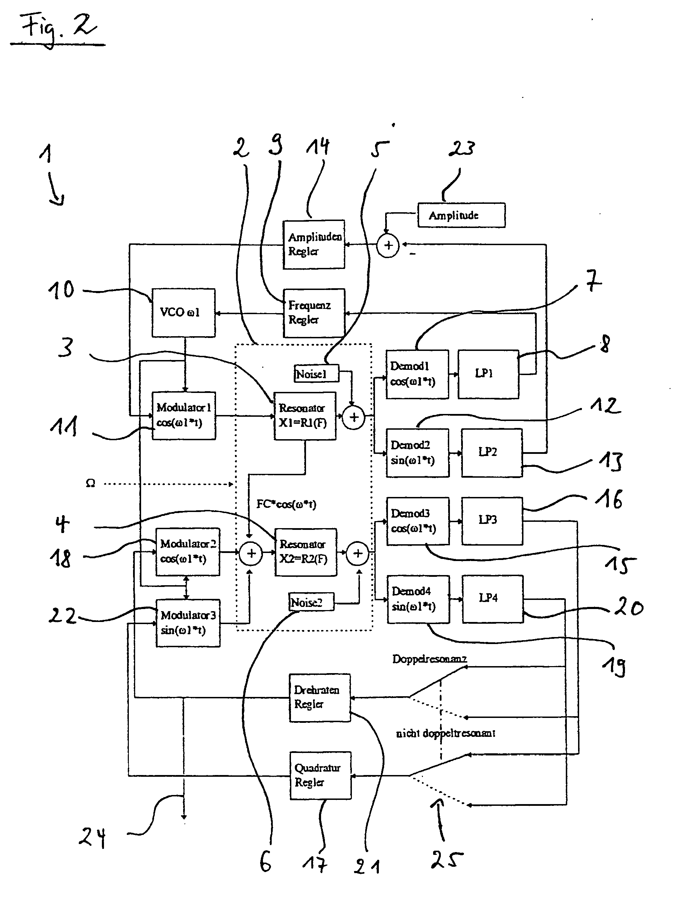

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffssystem (nicht gezeigt) gekoppelt. Das Rauschen, das durch die Kraftgeber und die Abgriffssysteme erzeugt wird, ist hier durch Noise1 (Bezugszeichen 5) und Noise2 (Bezugszeichen 6) schematisch angedeutet.

Der Corioliskreisel 1 weist des Weiteren vier Regelkreise auf:
Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen zweiten Modulator 18 auf. Der vierte Regelkreis enthält einen vierten Demodulator 19, ein viertes Tiefpassfilter 20, einen Drehratenregler 21 und einen dritten Modulator 22.

Der erste Resonator 3 wird mit dessen Resonanzfrequenz ω1 angeregt. Die resultierende Anregungsschwingung wird abgegriffen, mittels des ersten Demodulators 7 in Phase demoduliert, und ein demoduliertes Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz ω1. Es sei erwähnt, dass sämtliche Modulatoren und Demodulatoren auf Basis dieser Resonanzfrequenz ω1 betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC·cos(ω1·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz ω2 wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert, Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz ω2 der Ausleseschwingung annähernd gleich der Frequenz ω1 der Anregungsschwingung, wohingegen im nichtdoppelresonanten Fall die Frequenz ω2 der Ausleseschwingung verschieden von der Frequenz ω1 der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdopelresonant umzuschalten, ist ein Doppelschalter 25 vorgesehen, der die Ausgänge des dritten und vierten Tiefpassfilters 16, 20 wahlweise mit dem Drehratenregler 21 und dem Quadraturregler 17 verbindet.

Wenn der Corioliskreisel 1 doppelresonant betrieben werden soll, muss - wie erwähnt - die Frequenz der Ausleseschwingung auf die Frequenz der Anregungsschwingung abgestimmt werden. Dies kann beispielsweise auf mechanischem Wege erfolgen, in dem Material am Massensystem (dem Resonator 2) abgetragen wird. Alternativ hierzu kann die Frequenz der Ausleseschwingung auch mittels eines elektrischen Feldes, in dem der Resonator 2 schwingbar gelagert ist, also durch Änderung der elektrischen Feldstärke, eingestellt werden. Damit ist es möglich, auch während des Betriebs des Corioliskreisels 1 eine elektronische Abstimmung der Frequenz der Ausleseschwingung auf die Frequenz der Anregungsschwingung durchzuführen.

In der Druckschrift WO-A-9745699 ist ein Corioliskreisel beschrieben, mit dem sich die Frequenz der Ausleseschwingung auf die Frequenz der Anregungsschwingung durch Anregen einer Gleichspannung auf die sensierenden Elektroden durchführen lässt. Weiterhin sei auf die Druckschrift WO-A-9919734 verwiesen, in der ein Croioliskreisel gezeigt ist, der eine Frequenzabstimmung durch Anlegen einer Kraft auf den Resonator ermöglicht.

Die der Erfindung zugrunde liegende Aufgabe ist es, ein Verfahren bereit zu stellen, mit dem in einem Corioliskreisel die Frequenz der Ausleseschwingung auf die Frequenz der Anregungsschwingung elektronisch abgestimmt werden kann.

Diese Aufgabe wird durch das Verfahren gemäß den Merkmalen des Patentanspruchs 1 gelöst. Ferner stellt die Erfindung einen Corioliskreisel gemäß Patentanspruch 11 bereit. Vorteilhafte Ausgestaltungen und Weiterbildungen des Erfindungsgedankens finden sich in jeweiligen abhängigen Ansprüchen.

Erfindungsgemäß wird bei einem Verfahren zur elektronischen Abstimmung der Frequenz der Ausleseschwingung auf die Frequenz der Anregungsschwingung in einem Corioliskreisel der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Frequenz der Ausleseschwingung so geregelt wird, dass die Größe des in dem Auslesesignal enthaltenden Störanteils möglichst klein wird.

Eine der Erfindung zugrunde liegende wesentliche Erkenntnis ist, dass eine künstliche Änderung der Ausleseschwingung im Drehraten- oder Quadraturkanal um so stärker insbesondere im jeweils dazu orthogonalen Kanal sichtbar ist, je weniger die Frequenz der Ausleseschwingung mit der Frequenz der Anregungsschwingung übereinstimmt. Die "Durchschlagsstärke" einer derartigen Störung auf das Ausleseschwingungs-Abgriffsignal (insbesondere auf den orthogonalen Kanal) ist also ein Maß dafür, wie genau die Frequenz der Ausleseschwingung mit der Frequenz der Anregungsschwingung übereinstimmt. Wenn man also die Frequenz der Ausleseschwingung so regelt, dass die Durchschlagsstärke ein Minimum annimmt, d.h. dass die Größe des in dem Ausleseschwingungs-Abgriffsignal enthaltenen Störanteils minimal wird, so ist damit gleichzeitig die Frequenz der Ausleseschwingung auf die Frequenz der Anregungsschwingung im Wesentlichen abgestimmt.

Wesentlich hierbei ist, dass die Störkräfte auf den Resonator lediglich die Ausleseschwingung, nicht jedoch die Anregungsschwingung ändern. Unter Bezugnahme auf Fig. 2 bedeutet dies, dass die Störkräfte nur den zweiten Resonator 4 beaufschlagen, nicht jedoch den ersten Resonator 3.

Vorzugsweise wird die Störkraft durch ein Störsignal erzeugt, das entsprechenden Kraftgebern zugeführt wird bzw. auf Signale, die den Kraftgebern zugeführt werden, aufaddiert wird. Beispielsweise kann, um die Störkraft zu erzeugen, ein Störsignal auf jeweilige Regel-/Rückstellsignale zur Regelung/Kompensation der Ausleseschwingung aufaddiert werden.

Vorzugsweise ist das Störsignal ein Wechselsignal, beispielsweise eine Überlagerung von Sinus- bzw. Kosinussignalen. Diese Störsignal weist in der Regel eine feste Störfrequenz auf, womit der Störanteil des Ausleseschwingungs-Abgriffsignals durch einen entsprechenden Demodulationsprozess, der bei besagter Störfrequenz erfolgt, ermittelt werden kann. Eine Alternative ist, anstelle eines Wechselsignals bandbegrenztes Rauschen zu verwenden. In diesem Fall erfolgt die Demodulation des Störanteils aus dem Auslesesignal durch Korrelation des Störsignals (Rauschsignals) mit dem Auslesesignal (dem Signal, das den Störanteil enthält). Die Bandbreite des Rauschens hängt hierbei von den Eigenschaften des Resonators 2 und der Regelkreise ab.

Das oben beschriebene Verfahren kann sowohl auf einen Open-Loop- als auch auf einen Closed-Loop-Corioliskreisel angewandt werden. Im letzteren Fall wird das Störsignal vorzugsweise auf jeweilige Regel-/Rückstellsignale zur Regelung/Kompensation der Ausleseschwingung, aufaddiert. Beispielsweise kann das Störsignal zum Ausgangssignal eines Drehratenregelkreises hinzuaddiert, und der Störanteil aus einem Signal ermittelt werden, das an einem Quadraturregler eines Quadraturregelkreises anliegt oder von diesem ausgegeben wird. Umgekehrt kann das Störsignal zum Ausgangssignal des Quadraturregelkreises hinzuaddiert, und der Störanteil aus einem Signal ermittelt werden, das an einem Drehratenregler des Drehratenregelkreises anliegt oder von diesem ausgegeben wird. Alternativ hierzu kann das Störsignal auf das Ausgangssignal des Quadraturregelkreises aufaddiert, und der Störanteil aus einem Signal ermittelt werden, das an einem Quadraturregler des Quadraturregelkreises anliegt oder von diesem ausgegeben wird. Ferner ist es möglich, das Störsignal zum Ausgangssignal des Drehratenregelkreises hinzuzuaddieren, und den Störanteil aus einem Signal zu ermitteln, das an einem Drehratenregler des Drehratenregelkreises anliegt oder von diesem ausgegeben wird. Der Begriff "Auslesesignal" beinhaltet alle in diesem Absatz angeführten Signale, aus denen der Störanteil ermittelt werden kann. Zusätzlich beinhaltet der Begriff "Auslesesignal" das Ausleseschwingungs-Abgriffssignal.

Die Frequenzregelung der Ausleseschwingung, d.h. die Kraftübertragung der zur Frequenzregelung nötigen Regelkräfte erfolgt hierbei durch Regelung der Stärke eines elektrischen Felds, in dem mindestens ein Teil des Resonators schwingt, wobei eine elektrische Anziehungskraft zwischen dem Resonator und einem den Resonator umgebenden rahmenfesten Gegenstück vorzugsweise nichtlinear ist.

Die Erfindung stellt weiterhin einen Corioliskreisel bereit, der einen Resonator, eine Anregungseinheit, durch die der Resonator in Schwingungen versetzbar ist, eine Ausleseeinheit, mit der ein die Ausleseschwingung repräsentierendes Auslesesignal erzeugbar ist, einen Drehratenregelkreis sowie einen Quadraturregelkreis aufweist, und der gekennzeichnet ist durch eine Einrichtung zur elektronischen Abstimmung der Frequenz der Ausleseschwingung auf die Frequenz der Anregungsschwingung. Die Einrichtung zum elektronischen Abstimmen weist hierbei auf:
- eine Störeinheit, die auf den Drehratenregelkreis oder den Quadraturregelkreis ein Störsignal gibt,
- eine Störsignal-Detektiereinheit, die einen Störanteil ermittelt, der in einem die Ausleseschwingung repräsentierenden Auslesesignal enthalten ist und durch das Störsignal erzeugt wurde, und
- eine Regeleinheit, die die Frequenz der Ausleseschwingung so regelt, dass die Größe des in dem Auslesesignal enthaltenen Störanteils möglichst klein wird.

Vorzugsweise gibt die Störeinheit das Störsignal auf den Quadraturregelkreis, wobei dann die Störsignal-Detektiereinheit den Störanteil aus einem Signal ermittelt, das an einem Drehratenregler des Drehratenregelkreises anliegt oder von diesem ausgegeben wird. Umgekehrt kann die Störeinheit das Störsignal auf den Drehratenregelkreis geben, und die Störsignal-Detektiereinheit den Störanteil aus einem Signal ermitteln, das an einem Quadraturregler des Quadraturregelkreises anliegt oder von diesem ausgegeben wird. Ferner kann die Störeinheit das Störsignal auf den Drehratenregelkreis geben, und die Störsignal-Detektiereinheit den Störanteil aus einem Signal ermitteln, das an einem Drehratenregler des Drehratenregelkreises anliegt oder von diesem ausgegeben wird. Eine weitere Alternative ist, das Störsignal durch die Störeinheit auf den Quadraturregelkreis zu geben, wobei dann die Störsignal-Detektiereinheit den Störanteil aus einem Signal ermittelt, das an einem Quadraturregler des Quadraturregelkreises anliegt oder von diesem ausgegeben wird.

Vorzugsweise ist das Störsignal ein Wechselsignal mit einer festen Störfrequenz, wobei in diesem Fall die Einrichtung zur elektronischen Abstimmung von Ausleseschwingungs- und Anregungsschwingungsfrequenz vorteilhafterweise eine Demodulationeinheit aufweist, die das Auslesesignal bei der festen Störfrequenz demoduliert und damit den im Auslesesignal enthaltenen Störanteil ermittelt. Das Störsignal kann prinzipiell an einer beliebigen Stelle in die Regelkreise (Drehratenregelkreis und einen Quadraturregelkreis) eingeführt werden.

Im Folgenden wird unter Bezugnahme auf die begleitenden Figuren die Erfindung in beispielsweiser Ausführungsform näher erläutert. Es zeigen:
**Figur 1** den schematischen Aufbau eines Corioliskreisels, der auf dem erfindungsgemäßen Verfahren basiert;
**Figur 2** den schematischen Aufbau eines herkömmlichen Corioliskreisels.

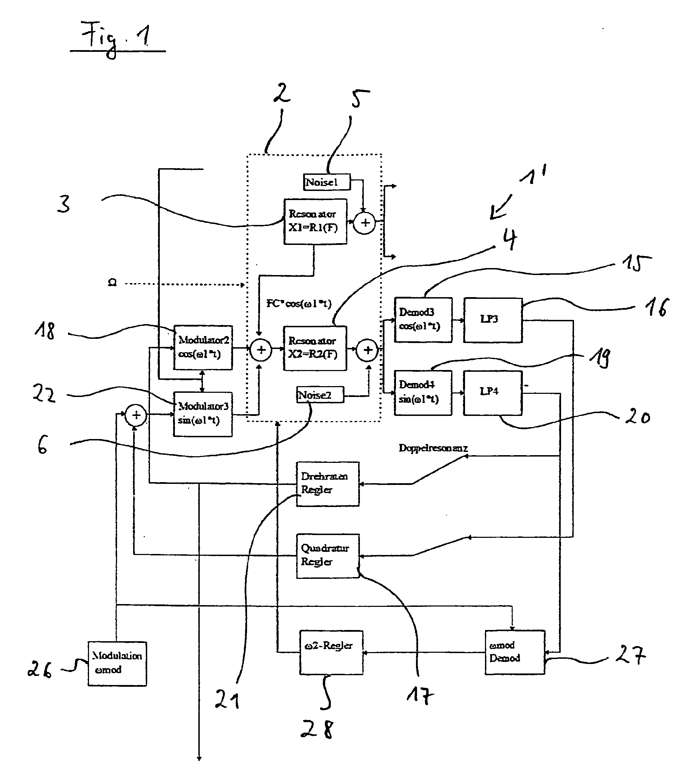

Zunächst wird unter Bezugnahme auf Figur 1 das erfindungsgemäße Verfahren in beispielsweiser Ausführungsform näher erläutert. Dabei sind Teile bzw. Einrichtungen, die denen aus Figur 2 entsprechen, mit den selben Bezugszeichen gekennzeichnet und werden nicht nochmals erläutert.

Ein Corioliskreisel 1' ist zusätzlich mit einer Störeinheit 26, einer Demodulationseinheit 27 und einem Ausleseschwingungs-Frequenzregler 28 versehen.

Die Störeinheit 26 erzeugt ein Wechselsignal mit einer Frequenz ωmod, das auf das Ausgabesignal eines Quadraturreglers 21 (d.h. am Kraftausgang der Quadraturregelung) aufaddiert wird. Das somit erhaltene zusammengesetzte Signal wird einem (dritten) Modulator 22 zugeführt, dessen entsprechendes Ausgabesignal einen Kraftgeber (nicht gezeigt) und damit den Resonator 2 beaufschlagt. Sofern die Frequenz der Ausleseschwingung nicht im Wesentlichen mit der Frequenz der Anregungsschwingung übereinstimmt, wird das durch die Störungs-Modulationseinheit 26 erzeugte Wechselsignal nach "Durchgang" durch den Resonator 2 in Form eines Störanteils des Ausleseschwingungs-Abgriffsignals beobachtet. Das Ausleseschwingungs-Abgriffsignal wird einem Demodulationsprozess unterzogen, der durch einen vierten Demodulator 19 ausgeführt wird, und einem vierten Tiefpassfilter 20 zugeführt, dessen Ausgangssignal sowohl einen Drehratenregler 21 als auch die Demodulationseinheit 27 beaufschlagt. Das der Demodulationseinheit 27 zugeführte Signal wird mit einer Modulationsfrequenz ωmod, die der Frequenz des durch die Störeinheit 26 erzeugten Wechselsignals entspricht, demoduliert. Damit wird der Störanteil bzw. das Signal, das die Störung repräsentiert, ermittelt. Die Demodulationseinheit 27 ist in diesem Beispiel somit als Störsignal-Detektiereinheit anzusehen. Ein Ausgangssignal der Demodulationseinheit 27 wird dem Ausleseschwingungs-Frequenzregler 28 zugeführt, der in Abhängigkeit davon die Frequenz der Ausleseschwingung so einstellt, dass das Ausgangssignal der Demodulationseinheit 27, d.h. die Stärke des beobachteten Störanteils, minimal wird. Ist ein derartiges Minimum erreicht, so stimmen die Frequenzen von Anregungsschwingung und Ausleseschwingung im Wesentlichen überein. Das der Demodulationseinheit 27 zugeführte Signal kann alternativ zum Signal, das dem Drehratenregler 21 zugeführt wird, auch das Signal sein, das der Drehratenregler 21 ausgibt.

Wie bereits erwähnt, kann alternativ hierzu das durch die Störeinheit 26 erzeugte Wechselsignal auch auf ein Ausgangssignal des Drehratenreglers 21 aufaddiert werden. In diesem Fall wäre das der Demodulationseinheit 27 zugeführte Signal am Eingang oder Ausgang des Quadraturreglers 17 abzugreifen.

Ferner ist es prinzipiell möglich, das Störsignal (hier das Wechselsignal, jedoch auch andere Störsignale wie bandbegrenztes Rauschen sind möglich) an einer beliebigen Stelle in den Quadraturregelkreis einzuspeisen (nicht nur unmittelbar vor dem dritten Modulator 22), d. h. an einer beliebigen Stelle zwischen dem Abgriff für die Ausleseschwingung und dem dritten Modulator 22. Analoge Überlegungen gelten für den Fall, das Störsignal in den Drehratenregelkreis einzuspeisen.

Es ist vorteilhaft, nach dem Einschalten des Corioliskreisels 1' die Modulationsfrequenz ωmod des Wechselsignals auf einen hohen Wert zu setzen, um eine schnelle Grobregelung der Frequenz der Ausleseschwingung zu erzielen. Dann kann auf eine relativ niedrige Modulationsfrequenz ωmod umgeschaltet werden, um eine Resonanz der Ausleseschwingung genau einzustellen. Zudem kann nach einer gewissen Zeit nach Einlaufen des Drehratenreglers 21 bzw. des Quadraturreglers 17 die Amplitude der Modulationsfrequenz ωmod stark reduziert werden. Da das Wechselsignal am Ausgang des Drehratenregelkreises, d.h. des dritten Regelkreises kompensiert wird, ist im Allgemeinen kein Sperrfilter für die Modulationsfrequenz ωmod im Drehratenregelkreis erforderlich.

Der Drehratenregler 21 hat gleichzeitig den Effekt, dass der dritte Demodulator 15 und der vierte Demodulator 19 den Kraftgeben für den Drehratenregelkreis (Kosinus-Kräfte) und Quadraturregelkreis (Sinus-Kräfte) phasenrichtig zugeordnet werden. Auf diese Weise können der Drehraten (vierter Regelkreis)- und Quadraturregelkreis (dritter Regelkreis) getrennt werden, auch wenn in der Analogelektronik des Corioliskreisels 1' Phasenverschiebungen auftreten, die sich insbesondere temperaturbedingt ändern können. Im Allgemeinen wird ein hoher Bias im Quadraturregelkreis auftreten. Sind dieser Regelkreis und der Drehratenregelkreis nicht sauber voneinander getrennt, erscheint dieser Bias auch im Drehratenregelkreis.

Auch wenn keine elektronische Frequenzabstimmung zwischen Anregungsschwingung und Ausleseschwingung erwünscht ist, kann der beschriebene Regelmechanismus zur Orthogonalisierung von Quadratur- und Drehratenregelkreis Verwendung finden. In diesem Fall ist die geregelte Größe die Referenzphase des dritten und vierten Demodulators 15, 19, die jeweils für Quadraturanteile und Drehratenanteile der Ausleseschwingung "zuständig" sind. Diese Regelung erfolgt vorzugsweise digital in einem Signalprozessor (DSP) und macht den Corioliskreisel bezüglich Phasenverschiebungen in der Analogelektronik unempfindlich.

Bei einem ersten zusätzlichen Verfahren zur elektronischen Abstimmung der Frequenz der Ausleseschwingung auf die Frequenz der Anregungsschwingung in einem Corioliskreisel wird der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Frequenz der Ausleseschwingung so geregelt wird, dass eine Phasenverschiebung zwischen einem Störsignal, das die Störkraft erzeugt, und dem im Auslesesignal enthaltenen Störanteil möglichst klein wird.

Unter "Resonator" wird hierbei das gesamte in Schwingung versetzbare Massensystem (oder ein Teil davon) des Corioliskreisels verstanden - also der mit Bezugsziffer 2 gekennzeichnete Teil des Corioliskreisels.

Eine dem ersten zusätzlichen Verfahren zugrunde liegende wesentliche Erkenntnis ist, dass die "Durchlaufzeit" einer Störung, also einer künstlichen Änderung der Ausleseschwingung durch Beaufschlagen des Resonators mit entsprechenden Störkräften, durch den Resonator, d. h. die Zeit, die ab dem Wirken der Störung am Resonator bis zum Abgriff der Störung als Teil des Auslesesignals verstreicht, von der Frequenz der Ausleseschwingung abhängt. Damit ist die Verschiebung zwischen der Phase des Störsignals und der Phase des in dem Auslesesignal enthaltenen Störanteilsignals ein Maß für die Frequenz der Ausleseschwingung. Es lässt sich zeigen, dass die Phasenverschiebung ein Minimum annimmt, wenn die Frequenz der Ausleseschwingung mit der Frequenz der Anregungsschwingung im Wesentlichen übereinstimmt. Wenn man daher die Frequenz der Ausleseschwingung so regelt, dass die Phasenverschiebung ein Minimum annimmt, so ist damit gleichzeitig die Frequenz der Ausleseschwingung auf die Frequenz der Anregungsschwingung im Wesentlichen abgestimmt.

Bei einem zweiten zusätzlichen Verfahren zur elektronischen Abstimmung der Frequenz der Ausleseschwingung auf die Frequenz der Anregungsschwingung in einem Corioliskreisel wird der Resonator des Corioliskreisels mittels einer Störkraft so beaufschlagt, dass a) die Anregungsschwingung im Wesentlichen unbeeinflusst bleibt, und b) die Ausleseschwingung so geändert wird, dass ein die Ausleseschwingung repräsentierendes Auslesesignal einen entsprechenden Störanteil enthält, wobei die Störkraft definiert ist als diejenige Kraft, die durch das Signalrauschen im Auslesesignal hervorgerufen wird. Die Frequenz der Ausleseschwingung wird hierbei so geregelt, dass die Größe des in dem Auslesesignal enthaltenen Störanteils, d.h. der Rauschanteil, möglichst klein wird.

Unter "Resonator" wird hierbei das gesamte in Schwingung versetzbare Massensystem des Corioliskreisels verstanden - also der mit Bezugsziffer 2 gekennzeichnete Teil des Corioliskreisels. Wesentlich hierbei ist, dass die Störkräfte auf den Resonator lediglich die Ausleseschwingung, nicht jedoch die Anregungsschwingung ändern. Unter Bezugnahme auf Fig. 2 würde dies bedeuten, dass die Störkräfte nur den zweiten Resonator 4 beaufschlagen, nicht jedoch den ersten Resonator 3.

Eine dem zweiten zusätzlichen Verfahren zugrunde liegende wesentliche Erkenntnis ist, dass ein Störsignal in Form von Signalrauschen, das direkt im Ausleseschwingungs-Abgriffssignal bzw. am Eingang der Regelkreise (Drehratenregelkreis/Quadraturregelkreis) auftritt, nach "Durchgang" durch die Regelkreise und den Resonator umso stärker im Ausleseschwingungs-Abgriffsignal beobachtbar ist, je weniger die Frequenz der Ausleseschwingung mit der Frequenz der Anregungsschwingung übereinstimmt. Das Signalrauschen, das das Signalrauschen der Ausleseschwingungs-Abgriffselektronik bzw. der random walk des Corioliskreisels ist, beaufschlagt nach "Durchlauf" durch die Regelkreise die Kraftgeber und erzeugt somit entsprechende Störkräfte, die den Resonator beaufschlagen und damit eine künstliche Änderung der Ausleseschwingung hervorrufen. Die "Durchschlagsstärke" einer derartigen Störung auf das Ausleseschwingungs-Abgriffsignal ist also ein Maß dafür, wie genau die Frequenz der Ausleseschwingung mit der Frequenz der Anregungsschwingung übereinstimmt. Wenn man also die Frequenz der Ausleseschwingung so regelt, dass die Durchschlagsstärke ein Minimum annimmt, d.h. dass die Größe des in dem Ausleseschwingungs-Abgriffsignal enthaltenen Störanteils, d.h. des Rauschanteils, minimal wird, so ist damit gleichzeitig die Frequenz der Ausleseschwingung auf die Frequenz der Anregungsschwingung abgestimmt.

Das erfindungsgemäße Verfahren zur elektronischen Abstimmung der Ausleseschwingungsfrequenz kann mit dem ersten zusätzlichen Verfahren und/oder dem zweiten zusätzlichen Verfahren beliebig kombiniert werden. Beispielsweise ist es möglich, bei Inbetriebnahme des Corioliskreisels das erste zusätzliche Verfahren anzuwenden (schnelles Einschwingverhalten), und anschließend das erfindungsgemäße Verfahren (langsamer Regelprozess) im eingeschwungenen Betrieb anzuwenden. Konkrete technische Ausgestaltungen sowie weitere Details zu den Verfahren kann der Fachmann den Patentschriften "Verfahren zur elektronischen Abstimmung der Ausleseschwingungsfrequenz eines Corioliskreisels", LTF-191-DE (DE 102 48 734.4) und LTF-192-DE (DE 102 48 735.4) desselben Anmelders entnehmen, in denen jeweils das erste zusätzliche Verfahren bzw. das zweite zusätzliche Verfahren beschrieben sind.

## Patentansprüche

1. Verfahren zur elektronischen Abstimmung der Frequenz der Ausleseschwingung auf die Frequenz der Anregungsschwingung in einem Corioliskreisel (1'),
**dadurch gekennzeichnet,**
- **dass** der Resonator (2) des Corioliskreisels (1') durch eine Störkraft so beaufschlagt wird, dass
a) die Anregungsschwingung im Wesentlichen unbeeinflusst bleibt, und
b) die Ausleseschwingung so geändert wird, dass ein die Ausleseschwingung repräsentierendes Auslesesignal einen entsprechenden Störanteil enthält, wobei
- die Frequenz der Ausleseschwingung so geregelt wird, dass die Größe des in dem Auslesesignal enthaltenen Störanteils möglichst klein wird.

2. Verfahren nach Anspruch 1, **dadurch gekennzeichnet, dass** die Störkraft durch ein Störsignal erzeugt wird, das auf jeweilige Regel-/Rückstellsignale zur Regelung/Kompensation der Ausleseschwingung aufaddiert wird.

3. Verfahren nach Anspruch 1 oder 2, **dadurch gekennzeichnet, dass** das Störsignal ein Wechselsignal ist.

4. Verfahren nach Anspruch 3, **dadurch gekennzeichnet, dass** das Störsignal eine feste Störfrequenz aufweist, und der Störanteil aus dem Auslesesignal durch Demodulieren des Auslesesignals mit der festen Störfrequenz ermittelt wird.

5. Verfahren nach Anspruch 1 oder 2, **dadurch gekennzeichnet, dass** das Störsignal bandbegrenztes Rauschen ist, und eine Demodulation des Störanteils aus dem Auslesesignal durch Korrelation des Störsignals mit dem Auslesesignal erfolgt.

6. Verfahren nach einem der Ansprüche 2 bis 5, **dadurch gekennzeichnet, dass** das Störsignal zum Ausgangssignal des Drehratenregelkreises hinzuaddiert wird, und der Störanteil aus einem Signal ermittelt wird, das an einem Quadraturregler (17) des Quadraturregelkreises anliegt oder von diesem ausgegeben wird.

7. Verfahren nach einem der Ansprüche 2 bis 5, **dadurch gekennzeichnet, dass** das Störsignal zum Ausgangssignal des Quadraturregelkreises hinzuaddiert wird, und der Störanteil aus einem Signal ermittelt wird, das an einem Drehratenregler (21) des Drehratenregelkreises anliegt oder von diesem ausgegeben wird.

8. Verfahren nach einem der Ansprüche 2 bis 5, **dadurch gekennzeichnet, dass** das Störsignal auf das Ausgangssignal des Quadraturregelkreises aufaddiert wird, und der Störanteil aus einem Signal ermittelt wird, das an einem Quadraturregler (17) des Quadraturregelkreises anliegt oder von diesem ausgegeben wird.

9. Verfahren nach einem der Ansprüche 2 bis 5, **dadurch gekennzeichnet, dass** das Störsignal zum Ausgangssignal des Drehratenregelkreises hinzuaddiert wird, und der Störanteil aus einem Signal ermittelt wird, das an einem Drehratenregler (21) des Drehratenregelkreises anliegt oder von diesem ausgegeben wird.

10. Verfahren nach einem der vorstehenden Ansprüche, **dadurch gekennzeichnet, dass** die Frequenzregelung der Ausleseschwingung durch Regelung der Stärke eines elektrischen Felds erfolgt, in dem ein Teil des Resonators (2) des Corioliskreisels (1') schwingt.

11. Corioliskreisel (1'), mit:
- einem Resonator (2)
- einer Anregungseinheit (11), durch die der Resonator in Schwingungen versetzbar ist,
- einer Ausleseeinheit (7, 8, 15, 19), mit der ein die Ausleseschwingung repräsentierendes Auslesesignal erzeugbar ist,
- einem Drehratenregelkreis (21) und einem Quadraturregelkreis (17) sowie
- einer Einrichtung zur elektronischen Abstimmung der Frequenz der Ausleseschwingung auf die Frequenz der Anregungsschwingung,
**gekennzeichnet durch**
- eine Störeinheit (26), die auf den Drehratenregelkreis oder den Quadraturregelkreis ein Störsignal gibt,
- eine Störsignal-Detektiereinheit (27), die einen Störanteil ermittelt, der in einem die Ausleseschwingung repräsentierenden Auslesesignal enthalten ist und **durch** das Störsignal erzeugt wurde, und
- eine Regeleinheit (28), die die Frequenz der Ausleseschwingung so regelt, dass die Größe des in dem Auslesesignal enthaltenen Störanteils möglichst klein wird.

12. Corioliskreisel (1') nach Anspruch 11, **dadurch gekennzeichnet, dass** die Störeinheit (26) das Störsignal auf den Drehratenregelkreis gibt, und die Störsignal-Detektiereinheit (27) den Störanteil aus einem Signal ermittelt, das an einem Quadraturregler (17) des Quadraturregelkreises anliegt oder von diesem ausgegeben wird.

13. Corioliskreisel (1') nach Anspruch 11, **dadurch gekennzeichnet, dass** die Störeinheit (26) das Störsignal auf den Quadraturregelkreis gibt, und die Störsignal-Detektiereinheit (27) den Störanteil aus einem Signal ermittelt, das an einem Drehratenregler (21) des Drehratenregelkreises anliegt oder von diesem ausgegeben wird.

14. Corioliskreisel (1') nach Anspruch 11, **dadurch gekennzeichnet, dass** die Störeinheit (26) das Störsignal auf den Drehratenregelkreis gibt, und die Störsignal-Detektiereinheit (27) den Störanteil aus einem Signal ermittelt, das an einem Drehratenregler (21) des Drehratenregelkreises anliegt oder von diesem ausgegeben wird.

15. Corioliskreisel (1') nach Anspruch 11, **dadurch gekennzeichnet, dass** die Störeinheit (26) das Störsignal auf den Quadraturregelkreis gibt, und die Störsignal-Detektiereinheit (27) den Störanteil aus einem Signal ermittelt, das an einem Quadraturregler (17) des Quadraturregelkreises anliegt oder von diesem ausgegeben wird.

16. Corioliskreisel (1') nach einem der Ansprüche 11 bis 15, **dadurch gekennzeichnet, dass** das Störsignal ein Wechselsignal mit einer festen Störfrequenz ist, und die Einrichtung zur elektronischen Abstimmung von Ausleseschwingungs- und Anregungsschwingungsfrequenz eine Demodulationeinheit (27) aufweist, die das Auslesesignal bei der festen Störfrequenz demoduliert und damit den im Auslesesignal enthaltenen Störanteil ermittelt.

## Claims

1. A method for electronic tuning of the frequency of the read oscillation to the frequency of the stimulation oscillation in a Coriolis gyro (1'), **characterized in that**
- the resonator (2) of the Coriolis gyro (1') has a disturbance force applied to it such that
a) the stimulation oscillation remains essentially uninfluenced, and
b) the read oscillation is changed such that a read signal which represents the read oscillation contains a corresponding disturbance component, wherein
- the frequency of the read oscillation is controlled such that the magnitude of the disturbance component which is contained in the read signal is as small as possible.

2. The method as claimed in claim 1, **characterized in that** the disturbance force is produced by a disturbance signal which is added to the respective control/reset signals for control/compensation of the read oscillation.

3. The method as claimed in claim 1 or 2, **characterized in that** the disturbance signal is an alternating signal.

4. The method as claimed in claim 3, **characterized in that** the disturbance signal is at a fixed disturbance frequency, and the disturbance component is determined from the read signal by demodulation of the read signal at the fixed disturbance frequency.

5. The method as claimed in claim 1 or 2, **characterized in that** the disturbance signal is band-limited noise, and the disturbance component is demodulated from the read signal by correlation of the disturbance signal with the read signal.

6. The method as claimed in one of claims 2 to 5, **characterized in that** the disturbance signal is added to the output signal from the rotation rate control loop, and the disturbance component is determined from a signal which is applied to a quadrature regulator (17) in the quadrature control loop, or is emitted from it.

7. The method as claimed in one of claims 2 to 5, **characterized in that** the disturbance signal is added to the output signal from the quadrature control loop, and the disturbance component is determined from a signal which is applied to a rotation rate regulator (21) in the rotation rate control loop, or is emitted from it.

8. The method as claimed in one of claims 2 to 5, **characterized in that** the disturbance signal is added to the output signal from the quadrature control loop, and the disturbance component is determined from a signal which is applied to a quadrature regulator (17) in the quadrature control loop, or is emitted from it.

9. The method as claimed in one of claims 2 to 5, **characterized in that** the disturbance signal is added to the output signal from the rotation rate control loop, and the disturbance component is determined from a signal which is applied to a rotation rate regulator (21) in the rotation rate control loop, or is emitted from it.

10. The method as claimed in one of the preceding claims, **characterized in that** the frequency of the read oscillation is controlled by controlling the intensity of an electrical field in which a part of the resonator (2) of the Coriolis gyro (1') oscillates.

11. A Coriolis gyro (1'), having:
- a resonator (2)
- a stimulation unit (11) by which the resonator can be oscillated,
- a read unit (7, 8, 15, 19)by which a read signal can be produced representing the read oscillation,
- a rotation rate control loop (21) and a quadrature control loop (17), and
- a device for electronic tuning of the frequency of the read oscillation to the frequency of the stimulation oscillation,
**characterized in that**
- a disturbance unit (26) which passes a disturbance signal to the rotation rate control loop or to the quadrature control loop,
- a disturbance signal detection unit (27), which determines a disturbance component which is contained in a read signal (which represents the read oscillation) and has been produced by the disturbance signal, and
- a control unit (28), which controls the frequency of the read oscillation such that the magnitude of the disturbance component which is contained in the read signal becomes as small as possible.

12. The Coriolis gyro (1') as claimed in claim 11, **characterized in that** the disturbance unit (26) passes the disturbance signal to the rotation rate control loop, and the disturbance signal detection unit (27) determines the disturbance component from a signal which is applied to a quadrature regulator (17) in the quadrature control loop, or is emitted from it.

13. The Coriolis gyro (1') as claimed in claim 11, **characterized in that** the disturbance unit (26) passes the disturbance signal to the quadrature control loop, and the disturbance signal detection unit (27) determines the disturbance component from a signal which is applied to a rotation rate regulator (21) in the rotation rate control loop, or is emitted from it.

14. The Coriolis gyro (1') as claimed in claim 11, **characterized in that** the disturbance unit (26) passes the disturbance signal to the rotation rate control loop, and the disturbance signal detection unit (27) determines the disturbance component from a signal which is applied to a rotation rate regulator (21) in the rotation rate control loop, or is emitted from it.

15. The Coriolis gyro (1') as claimed in claim 11, **characterized in that** the disturbance unit (26) passes the disturbance signal to the quadrature control loop, and the disturbance signal detection unit (27) determines the disturbance component from a signal which is applied to a quadrature regulator (17) in the quadrature control loop, or is emitted from it.

16. The Coriolis gyro (1') as claimed in one of claims 11 to 15, **characterized in that** the disturbance signal is an alternating signal at a fixed disturbance frequency, and the device for electronic tuning of the read oscillation frequency and stimulation oscillation frequency has a demodulation unit (27), which demodulates the read signal at the fixed disturbance frequency and thus determines the disturbance component which is contained in the read signal.

## Revendications

1. Procédé d'accord électronique de la fréquence de la vibration d'extraction à la fréquence de la vibration d'excitation dans un gyroscope vibrant (1'),
**caractérisé**
- **en ce que** le résonateur (2) du gyroscope vibrant (1') est sollicité par une force perturbatrice de telle sorte que
a) la fréquence d'excitation reste globalement non influencée, et
b) la fréquence d'extraction soit modifiée de telle sorte qu'un signal d'extraction représentant la vibration d'extraction contienne une part perturbatrice correspondante, étant précisé que
- la fréquence de la vibration d'extraction est réglée de telle sorte que la grandeur de la part perturbatrice contenue dans le signal d'extraction soit aussi petite que possible.

2. Procédé selon la revendication 1, **caractérisé en ce que** la force perturbatrice est produite par un signal perturbateur qui est ajouté à des signaux de régulation/remise à zéro pour la régulation/compensation de la vibration d'extraction.

3. Procédé selon la revendication 1 ou 2, **caractérisé en ce que** le signal perturbateur est un signal variable.

4. Procédé selon la revendication 3, **caractérisé en ce que** le signal perturbateur présente une fréquence perturbatrice fixe et la part perturbatrice est déterminée à partir du signal d'extraction grâce à une démodulation de celui-ci avec la fréquence perturbatrice fixe.

5. Procédé selon la revendication 1 ou 2, **caractérisé en ce que** le signal perturbateur est un bruit de fond à bande limitée, et une démodulation de la part perturbatrice à partir du signal d'extraction a lieu grâce à une corrélation du signal perturbateur avec le signal d'extraction.

6. Procédé selon l'une des revendications 2 à 5, **caractérisé en ce que** le signal perturbateur est ajouté au signal de sortie du circuit de régulation de vitesse de rotation, et la part perturbatrice est déterminée à partir d'un signal qui est appliqué au niveau d'un régulateur de quadrature (17) du circuit de régulation de quadrature ou qui est sorti par celui-ci.

7. Procédé selon l'une des revendications 2 à 5, **caractérisé en ce que** le signal perturbateur est ajouté au signal de sortie du circuit de régulation de quadrature, et la part perturbatrice est déterminée à partir d'un signal qui est appliqué au niveau d'un régulateur de vitesse de rotation (21) du circuit de régulation de vitesse de rotation ou qui est sorti par celui-ci.

8. Procédé selon l'une des revendications 2 à 5, **caractérisé en ce que** le signal perturbateur est ajouté au signal de sortie du circuit de régulation de quadrature, et la part perturbatrice est déterminée à partir d'un signal qui est appliqué au niveau d'un régulateur de quadrature (17) du circuit de régulation de quadrature ou qui est sorti par celui-ci.

9. Procédé selon l'une des revendications 2 à 5, **caractérisé en ce que** le signal perturbateur est ajouté au signal de sortie du circuit de régulation de vitesse de rotation, et la part perturbatrice est déterminée à partir d'un signal qui est appliqué au niveau d'un régulateur de vitesse de rotation (21) du circuit de régulation de vitesse de rotation ou qui est sorti par celui-ci.

10. Procédé selon l'une des revendications précédentes, **caractérisé en ce que** la régulation de fréquence de la vibration d'extraction se fait grâce à la régulation de l'intensité d'un champ électrique dans lequel une partie du résonateur (2) du gyroscope vibrant (1') vibre.

11. Gyroscope vibrant (1') avec :
- un résonateur (2),
- une unité d'excitation (11) qui fait vibrer le résonateur,
- une unité d'extraction (7, 8, 15, 19) avec laquelle un signal d'extraction représentant la vibration d'extraction peut être produit,
- un circuit de régulation de vitesse de rotation (21) et un circuit de régulation de quadrature (17), et
- un dispositif pour l'accord électronique de la fréquence de la vibration d'extraction à la fréquence de la vibration d'excitation,
**caractérisé par**
- une unité perturbatrice (26) qui envoie un signal perturbateur au circuit de régulation de vitesse de rotation ou au circuit de régulation de quadrature,
- une unité de détection de signal perturbateur (27) qui détermine une part perturbatrice qui est contenue dans un signal d'extraction représentant la vibration d'extraction et qui a été produite par le signal perturbateur, et
- une unité de régulation (28) qui règle la fréquence de la vibration d'extraction de telle sorte que la grandeur de la part perturbatrice contenue dans le signal d'extraction devienne aussi petite que possible.

12. Gyroscope vibrant (1') selon la revendication 11, **caractérisé en ce que** l'unité perturbatrice (26) envoie le signal perturbateur au circuit de régulation de vitesse de rotation, et l'unité de détection de signal perturbateur (27) détermine la part perturbatrice à partir d'un signal qui est appliqué au niveau d'un régulateur de quadrature (17) du circuit de régulation de quadrature ou qui est sorti par celui-ci.

13. Gyroscope vibrant (1') selon la revendication 11, **caractérisé en ce que** l'unité perturbatrice (26) envoie le signal perturbateur au circuit de régulation de quadrature, et l'unité de détection de signal perturbateur (27) détermine la part perturbatrice à partir d'un signal qui est appliqué au niveau d'un régulateur de vitesse de rotation (21) du circuit de régulation de vitesse de rotation ou qui est sorti par celui-ci.

14. Gyroscope vibrant (1') selon la revendication 11, **caractérisé en ce que** l'unité perturbatrice (26) envoie le signal perturbateur au circuit de régulation de vitesse de rotation, et l'unité de détection de signal perturbateur (27) détermine la part perturbatrice à partir d'un signal qui est appliqué au niveau d'un régulateur de vitesse de rotation (21) du circuit de régulation de vitesse de rotation ou qui est sorti par celui-ci.

15. Gyroscope vibrant (1') selon la revendication 11, **caractérisé en ce que** l'unité perturbatrice (26) envoie le signal perturbateur au circuit de régulation de quadrature, et l'unité de détection de signal perturbateur (27) détermine la part perturbatrice à partir d'un signal qui est appliqué au niveau d'un régulateur de quadrature (17) du circuit de régulation de quadrature ou qui est sorti par celui-ci.

16. Gyroscope vibrant (1') selon l'une des revendications 11 à 15, **caractérisé en ce que** le signal perturbateur est un signal variable avec une fréquence perturbatrice fixe, et le dispositif pour l'accord électronique de la fréquence de vibration d'extraction et de la fréquence de vibration d'excitation comporte une unité de démodulation (27) qui démodule le signal d'extraction à la fréquence perturbatrice fixe et qui détermine ainsi la part perturbatrice contenue dans le signal d'extraction.
